# EUROPEAN PATENT APPLICATION

(11) **EP 0 842 968 A1**
(43) Date of publication of application: **20.05.1998**
(21) Application number: 97309171.3
(22) Date of filing: 13.11.1997
(51) Int. Cl.: C08J 5/06, C09J 121/02

(54) **Adhesive composition**

(30) Priority: 13.11.1996 GB 9623574
(71) Applicant: JOHN HEATHCOAT & COMPANY LIMITED, Westexe Tiverton Devon EX16 5LL (GB)
(72) Inventor: Buckley, Roy William, Halbarton, Devon (GB)
(74) Representative: Stevens, Ian Edward

(57) **Abstract**

An adhesive composition comprises a phenolic resin and a latex, and, in addition, from 0.1 to 30% of an aqueous dispersion of a hydrocarbon wax.

The adhesive composition has use in the production of composite articles comprising rubber and a fabric, such as transmission belts and conveyor belts. By using the adhesive composition, the extensibility of the fabric can be increased without reducing the strength of the adhesive bond between the fabric and the rubber. A composite article may thus be formed by a method comprising treating a fabric with the adhesive composition, drying the treated fabric, applying a layer of an unvulcanised rubber to the dried, treated fabric and vulcanising the rubber.

## Description

This invention relates to an adhesive composition, to a process for its preparation and to a method of forming a composite article using the composition.

Composite materials based on a combination of a vulcanised rubber and a fabric (rubber/fabric composites) are well-known. Examples of articles which are made from these materials are the synchronous transmission belts which are used in automobiles. The composites are formed by applying a layer of unvulcanised rubber to a fabric and then vulcanising the rubber. The fabric is conventionally treated with an adhesive prior to the application of the rubber in order to enhance the bonding of the two materials.

The fabric which is used to make the composite article should desirably have a relatively high extensibility and ease of stretch (i.e., low modulus of elasticity), particularly when the article is a transmission belt. A number of substances, such as silicone waxes and oils, are known to impart these desirable properties to fabrics. However, these substances are unsuitable for use in rubber/fabric composites because they severely reduce the strength of the bonding between the rubber and the fabric.

It has now been found that by modifying the adhesive which is applied to the fabric before it is brought into contact with the unvulcanised rubber, the extensibility of the fabric can be increased (and its modulus of elasticity decreased) without reducing the strength of the bond between the fabric and the rubber. In fact, it has surprisingly been found that the strength of the bond increases and, equally surprisingly, that there is a significant improvement in a number of the other important properties of the fabric and the rubber/fabric composites.

Accordingly, the present invention provides an adhesive composition comprising a phenolic resin and a latex characterised in that the composition further comprises from 0.1 to 30% of an aqueous dispersion of a hydrocarbon wax.

When the adhesive composition is used in the formation of a composite article comprising rubber and a fabric, the extensibility and ease of stretch of the fabric increases (relative to the same fabric treated with a conventional adhesive composition), as does the adhesion of the fabric to the rubber. Also, the tensile strength of the fabric and its abrasion resistance are significantly increased. This improvement in a number of the properties of the adhesive-treated fabric was completely unexpected. As mentioned above, it had been expected that increasing the extensibility and ease of stretch would lead to a deterioration in the other useful properties of the composite material.

In another embodiment, the invention relates to a process for preparing the adhesive composition of the invention which comprises mixing a phenolic resin, a latex and from 0.1 to 30% of an aqueous dispersion of a hydrocarbon wax.

Since the composition of the invention is particularly useful in the formation of rubber/fabric composites, the invention also provides a method of forming a composite article which comprises treating a fabric with the adhesive composition of the invention, drying the treated fabric, applying a layer of an unvulcanised rubber to the dried, treated fabric and vulcanising the rubber. Preferably, the composite article is a transmission belt. The method for forming the composite article may be analagous to conventional methods and may include further treatment of the treated fabric with a solvent solution or paste of the rubber compound, and drying, before the unvulcanised rubber is applied.

The hydrocarbon wax preferably has a melting point in the range of from 40 to 100°C. Although the wax may contain aromatic or alicyclic compounds, may be branched or unbranched, saturated or unsaturated, and may have a degree of substitution by groups other than hydrogen, it conveniently comprises linear, aliphatic C₂₄ to C₃₀ alkanes. The wax may be a single compound or a mixture of compounds.

The adhesive composition of the invention comprises from 0.1 to 30% by weight (preferably from 1 to 20% by weight) of an aqueous dispersion of a hydrocarbon wax. At levels of the dispersion of less than 0.1%, the dispersion has only a minimal effect in improving the properties of the adhesive and at levels above 30%, the adhesive properties of the composition are unacceptably reduced.

The dispersion typically comprises from 30 to 70% by weight of the hydrocarbon wax (preferably from 40 to 60%) and may also contain an emulsifier and a stabiliser for the dispersion. The dispersion is conveniently a colloidal suspension of the wax in water, although non-colloidal suspensions may be used provided that the wax particles are relatively small i.e., on average not significantly greater than the size required for a colloidal suspension. The wax particles are desirably as small as is practically possible. Sizes of up to 5µm (e.g., about 1 µm) are preferred. The dispersion can be formed by pouring molten wax, with stirring, into water containing an emulsifier; those skilled in the art are aware that the speed and type of stirring affects the size of the wax particles. Dispersions of a type which is suitable for use in the present invention are commercially available and are sometimes referred to as emulsions.

The phenolic resin may be a resin which is used in the conventional adhesives. An example of this type of resin, which is preferred for use in the adhesive compositions of the invention, is a resorcinol/ formaldehyde pre-condensate. Thermosetting phenolic resins are particularly suitable for use in the adhesive compositions of the invention. The phenolic resin is preferably included in the adhesive composition in an amount of from 0.5 to 20% (more preferably from 1 to 10%) by weight.

The adhesive composition contains a latex and, like the phenolic resin, this may be a latex of the type used in the conventional adhesives. The latex may be of a natural or synthetic rubber and may contain a single type of rubber or a mixture. Preferably, the latex comprises hydrogenated nitrile, polychloroprene or vinyl pyridine/styrene/butadiene terpolymer latices or mixtures thereof. The latex is generally included in the adhesive composition in an amount of up to 80% (e.g., 5 to 30%) by weight depending on the properties required.

'The adhesive composition preferably contains water and this can provide some or all of the balance of the composition.

The fabric which is used in the invention may be woven, non-woven or knitted and may be made of natural or synthetic fibres. Preferably, however, the fabric is made of polyamide fibres, more preferably fibres of nylon-66. High tenacity nylon-66 is particularly useful when the composite article formed from the fabric is a transmission belt. The fabric is desirably woven with a flat filament multifilament warp and textured multifilament weft.

The rubber which is bound to the fabric to form the composite article may be a body of a conventional natural or synthetic rubber or a mixture of natural and synthetic rubber, but is preferably a synthetic rubber such as an HNBR or polychloroprene rubber. The rubber is applied to the fabric as an unvulcanised (or "green") composition, preferably by a standard moulding process, and is then vulcanised (or "cured") under the appropriate conditions of temperature and pressure, using techniques well-known in the art. A conventional method for forming a transmission belt by bonding a fabric to rubber is, for example, disclosed in EP-A-0629848.

By improving the properties of the fabric, the adhesive composition of the invention enables the formation of improved rubber/fabric composite materials. Thus, it can provide an enhancement in the performance of a number of products such as transmissions belts, conveyor belts and the like.

Without wishing to be bound by theory, it is believed that the wax particles in the adhesive compositions of the invention increase the adhesion of the fabric to the rubber by a conditioning effect in the fabric. This conditioning effect may increase the tendency of the fibres in the fabric to act individually in the bonding process rather than as groups of fibres. Thus, the points of adhesion between the fabric and the rubber are more evenly distributed at the interface between the materials, leading to a stronger adhesive bond. This effect may also be responsible for the increased resistance of the adhesive-treated fabric to abrasion, although the mechanism of this is somewhat unclear.

The following examples illustrate the present invention, by way of example only.

### EXAMPLE 1

An aliphatic hydrocarbon wax (mixture of C₂₅ to C₂₇ alkanes) was emulsified into an oil in water emulsion by pouring the molten wax into water at 80°C with high speed stirring. The water contained an anionic emulsifier and a hydroxyethylcellulose protective colloid. Stirring was continued until the temperature of the water dropped to below 45°C. The resulting dispersion was allowed to cool. The dispersion contained 50% wax (by weight) and was incorporated at a level of 7% by weight into a standard resorcinol/formaldehyde/latex formulation based on 3.5% by weight resorcinol/formaldehyde pre-condensate resin (Vulkadur T^{R} from Bayer AG) and 21.5% by weight hydrogenated nitrile latex (Chemisat LCH-7335X^{R} from Goodyear Chemicals). The balance of the composition was water.

The resulting adhesive composition was impregnated, by a standard padding process, into high tenacity nylon-66 woven fabric with a flat filament multifilament warp and textured multifilament weft. The impregnated fabric was air dried at an elevated temperature below 200°C.

The treated fabric was tested for tensile strength (before and after oven ageing), extension and modulus of elasticity using an Instron^{R} testing apparatus and for abrasion resistance using the abrasion tester described in EP-A-0629848. The data obtained was compared with data obtained for the same fabric treated with the same resorcinol/formaldehyde/latex formulation but without the hydrocarbon wax dispersion. The results are shown in Table 1.

**Table 1**

| Test | Fabric Treated With Conventional Adhesive | Fabric Treated With Adhesive Of The Invention |
|---|---|---|
| **Retained tensile strength (%)** | | |
| (i) without ageing | 70.7 | 91.9 |
| (ii) after 3 days at 140°C | 64 | 94 |
| (iii) after 7 days at 140°C | 62 | 85 |
| (iv) after 10 days at 140°C | 55 | 76 |
| (v) after 14 days at 140°C | 49 | 73 |
| Extension (%) (2kg load) | 27.0 | 41.9 |
| Load at 50% Extension (kg) | 8.0 | 2.6 |
| Retained Tensile Strength (%) after 20 hours abrasion, 0.5mm blade @ 1750 rpm | 0 (total wear) | 69.1 |

The treated fabric was applied to an unvulcanised rubber having the following composition (based on parts per hundred of rubber):

| | |
|---|---|
| HNBR rubber (Zetpol 2020^{R} - Nippon Zeon) | 100 |
| Zinc oxide | 5 |
| Stearic acid | 1 |
| N-770^{R}(SRF) carbon black | 60 |
| TMTD (Tri-(2-ethylhexyl) trimellitate) Plasticiser | 10 |
| MBZ (Zinc-2-mercaptobenzimidazole) Antioxidant | 1.5 |
| 445 (Substituted diphenylamine) Antioxidant | 1.5 |
| Sulphur | 0.5 |
| TMTD (Tetramethyl thiuram disulphide) Accelerator | 1.5 |
| CBTS (N-cyclohexyl-2-benzothiozyl) sulphenamide | 1 |

The green rubber/fabric composite was placed between hot plates in a press for 30 minutes at about 150°C under a pressure of 550 kPa (80 psi) to vulcanise the rubber. The resulting bonded composite was tested to measure the bond strength between the fabric and the rubber using an Instron^{R} testing apparatus. The bond strength for a rubber/fabric composite made from the fabric treated with the conventional adhesive used in Example 1 was determined for comparative purposes. The results are shown in Table 2.

**Table 2**

| | Conventional Rubber/Fabric Composite | Rubber/Fabric Composite Produced Using the Adhesive Of The Invention |
|---|---|---|
| Bond Strength (kg/m) | 630 | 1461 |

### EXAMPLE 2

An adhesive composition was prepared as in Example 1, except that a vinyl pyridine/styrene/butadiene terpolymer latex (Pliocord LVP-107^{R} from Goodyear Chemicals) in an amount of 10% by weight was used in place of the hydrogenated nitrile latex.

The adhesive composition was impregnated into a medium tenacity weft stretch woven fabric of similar make up to that in Example 1 and the same tests were carried out on the treated fabric according to the invention and on a fabric treated using the same adhesive composition without the wax dispersion, for comparative purposes. The results are given in Table 3.

**Table 3**

| Test | Fabric Treated With Conventional Adhesive | Fabric Treated With Adhesive Of The Invention |
|---|---|---|
| Retained Tensile Strength (%) after 20 hours abrasion, 0.5mm blade @ 1750 rpm | 69.2 | 89.4 |
| Extension (%) (2kg load) | 21.6 | 24.6 |
| Load at 50% Extension (kg) | 4.1 | 3.8 |

Rubber/fabric composites were obtained from the treated fabrics in the same manner as in Example 1 using the following rubber composition:

| | %wt |
|---|---|
| Polychloroprene rubber (based on 3-chloro-1,3-butadiene) | 65.5 |
| Carbon black | 19.0 |
| Magnesium oxide | 5.2 |
| Naphthenic petroleum oil | 3.5 |
| Diphenylamine based antioxidant | 3.3 |
| Sulphur | 1.7 |
| Zinc oxide | 1.0 |
| Benzothiozyl disulphide | 0.2 |
| Stearic acid | 0.6 |

The bond strengths for the two vulcanised composites are given in Table 4.

**Table 4**

| | Conventional Rubber/Fabric Composite | Rubber/Fabric Composite Produced Using the Adhesive Of The Invention |
|---|---|---|
| Bond Strength (kg/m) | 654 | 819 |

Examples 1 and 2 show that there is a significant improvement in all of the properties which were measured when the fabric is treated with the adhesive composition of the invention, relative to the same fabric treated with the corresponding conventional adhesive.

## Claims

1. Adhesive composition comprising a phenolic resin and a latex characterised in that the composition further comprises from 0. 1 to 30% of an aqueous dispersion of a hydrocarbon wax.

2. Composition as claimed in claim 1, wherein the wax has a melting point in the range of from 40 to 100°C.

3. Composition as claimed in claim 1 or claim 2, wherein the wax comprises one or more linear, aliphatic C₂₄ to C₃₀ alkanes.

4. Composition as claimed in any one of claims 1 to 3, wherein the dispersion comprises from 30 to 70% hydrocarbon wax.

5. Composition as claimed in any one of claims 1 to 4, wherein the dispersion comprises an emulsifier and a stabiliser for the dispersion.

6. Composition as claimed in any one of claims 1 to 5, wherein the phenolic resin comprises a resorcinol/formaldehyde pre-condensate.

7. Composition as claimed in any one of claims 1 to 6, wherein the latex comprises hydrogenated nitrile, polychloroprene or vinyl pyridine/styrene/butadiene terpolymer latices or mixtures thereof.

8. Process for preparing the adhesive composition of any one of claims 1 to 7 comprising mixing a phenolic resin, a latex and from 0.1 to 30% of an aqueous dispersion of a hydrocarbon wax.

9. Method of forming a composite article comprising treating a fabric with the adhesive composition of any one of claims 1 to 7, drying the treated fabric, applying a layer of an unvulcanised rubber to the dried, treated fabric and vulcanising the rubber.

10. Method as claimed in claim 9, wherein the fabric is of nylon-66.

11. Method as claimed in claim 9 or claim 10, wherein the rubber is a synthetic rubber.

12. Method as claimed in any one of claims 9 to 11, wherein the composite article is a transmission belt.
